(19) Europäisches Patentamt

European Patent Office

Office européen des brevets

(11) **EP 1 585 060 A1**

(12) **EUROPEAN PATENT APPLICATION**

(43) Date of publication:
**12.10.2005 Bulletin 2005/41**

(51) Int Cl.⁷: **G06T 9/00**

(21) Application number: **04008308.1**

(22) Date of filing: **06.04.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71) Applicant: **Visiowave S.A.**
**1024 Ecublens (CH)**

(72) Inventors:
 • **Baudot, Marie-Dominique**
  **75005 Paris (FR)**

• **Reichel, Julien**
 **1020 Renens (CH)**
• **Roncin, Didier**
 **1024 Ecublens (CH)**
• **Ziliani, Francesco**
 **1004 Lausanne (CH)**

(74) Representative: **Bugnion Genève**
**Bugnion S.A.**
**Conseils en Propriété Industrielle**
**Case Postale 375**
**1211 Genève 12 (CH)**

(54) **Subband video coding with temporal prediction**

(57)    The invention relates to a video compression circuit. It comprises :

A video input (**1**) that receives an input video signal.
A transform module (**2-13**), connected to the input (**1**) and equipped to decompose a series of n input images, each into four subbands.
A time prediction module (**14-18**), which computes a time prediction of each subband.
A quantized data output bus that sends the output signal out (**19**). One of the said four subbands becomes the next image in the series (**10**), while the three other subbands are sent to the next module of time prediction (**14-18**). Said series of n images are interleaved on said transform module's input stream (**11**).

A dual video decompression circuit comprises:

 an input (**20**) that receives the quantized coefficients.

A time prediction module (**21-24**) equipped to dequantize the coefficients and compute a time prediction of each subband.
An inverse transform module (**25-32**) connected to the time predictor's output, equipped to reconstruct a series of n arrays of four subbands each into an image. Said reconstructed image is fed back to the inverse transform input (**33**) and becomes the fourth subband of the next level of reconstruction.
A video output (**37**) that sends the output signal out

**Figure 1**

**Description**

**Field of the invention**

The present invention generally relates to the field of video data compression. More specifically, the present invention relates to a low latency three-dimensional video coder and decoder circuit.

**Background of the invention**

**Wavelets and the wavelet transform**

A proven procedure for coding a waveform such as a video signal consists in a signal analysis for extracting perceptually significant parameters from the input signal. This analysis is exploited for keeping only the most relevant information this signal contains, thus reducing the amount of data to store or to transmit. On the receiver end, the signal is re-synthesized using the inverse operation on the parameters that have been kept in the transmission/storage of the compressed signal.

Traditionally the Fourier transform was the basis for such an analysis-resynthesis approach, but over the past twenty years, there has been an explosion of interest in the mathematical construct referred to as wavelets [3].

Wavelets have become a powerful signal analysis tool to represent and model complex data and are now widely used in video encoders for their intuitive representation of waveforms. Instead of representing signals as a linear combination of sinusoids, as in the Fourier or short-time Fourier analysis, the wavelet transform represents a given function as a linear combination of wavelets. Unlike the infinite energy sine wave of the Fourier analysis, the mother wavelet is designed to be compact, with its energy concentrated in time or space to give a tool for the analysis of transients and time-varying phenomenons as well as a tool for the decomposition of stationary signals. In the wavelet analysis, the wavelet basis functions are derived from the original mother wavelet by translations and dilations. By correlating the input to such a set of wavelet functions, one can extract very localized information in space and in frequency. Thus, the wavelet function is the basis for a flexible mathematical tool that allows simultaneous space and frequency analysis.

**Multi-resolution pyramid**

Multi-resolution analysis consists of decomposing a complex function to a lower level resolution; detail that is lost from the process is captured in the wavelet, or detail coefficients. The low-level resolution signal can be decomposed again so as to build its representation at several levels of resolution. In this iterative process, the time scaling of the wavelet maintains the frequency resolution throughout the spectrum. Mallat and Meyer [1], [2], developed this theory and proposed the pyramidal algorithm as a mean to compute the set of discrete signals of the multiresolution wavelet representation. The result of the recursive wavelet transform is a time-scale representation of the input function at multiple levels of detail. This is the basis of most today's wavelet implementations.

In including an additional scaling property to the set of wavelets used in multiresolution approximation, the wavelet transform can be implemented using a filter bank composed of *quadrature mirror filters.* For obtaining the low level resolution of the input signal, a low-pass filter is used that will reduce the signal bandwidth. Its mirror filter is a high-pass filter that extracts the high frequency content of the signal. In addition, in order to obtain identical reconstruction of the original signal on the synthesis side, bi-orthogonal wavelets are used; they are associated with *perfect reconstruction filter* banks.

The wavelet transform is therefore computed with a set of two filters, a low-pass and a high-pass. Successively applied on the shifted input samples, the high-pass filter extracts the signal's high frequency components; the low-pass outputs the low level resolution signal. In order to keep the amount of data constant, both filters decimate the input sequence by two by working on every other sample.

**Bidimensional analysis**

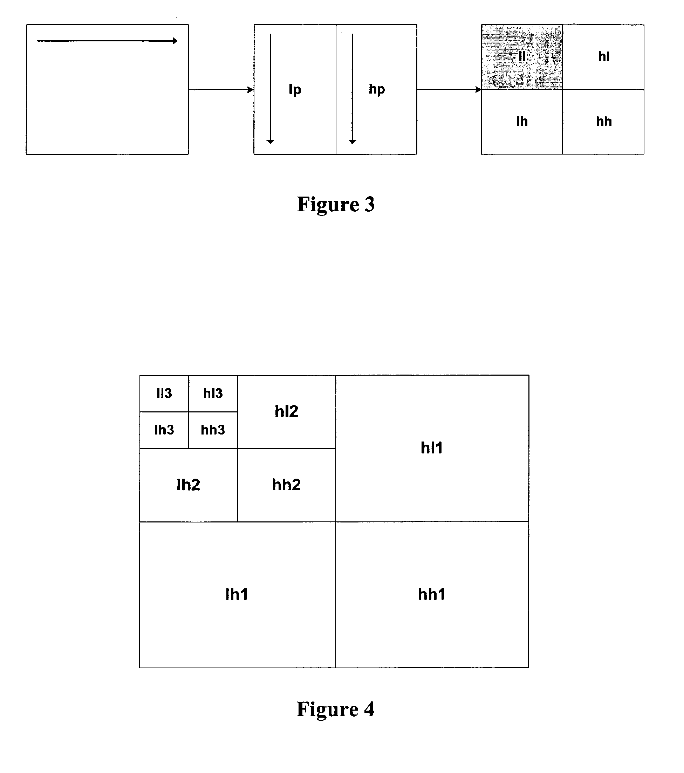

To analyse a two-dimensional image, the wavelet transform is computed with separate filtering of the signal along the horizontal and vertical dimensions. The decomposition of an image gives the lower and high frequencies both in the horizontal and vertical dimensions. The wavelet transform can be interpreted as a signal decomposition in a set of independent, spatially oriented frequency channels: an image is separated into four quadrants, that each represent the high frequency content of the image in the vertical, horizontal and diagonal orientations and where the last quadrant is the coarse scale approximation in both directions represented by one fourth the resolution of the original frame (illustrated on Figure 3).

For the multiresolution analysis of a multidimensional signal, the low resolution quadrant is decomposed again. The result of this process, referred to as the Mallat's tree, gives the bidimensional decomposition of an image at different levels of resolution (Figure 4). This decomposition is also referred to as the *non-standard* version of the wavelet bidimensional transform where operations on rows and columns are done on one resolution level before proceeding to the next level of finer resolution. This version is slightly more efficient to compute than the *standard* decomposition since the data on which recursions are performed are reduced to a quarter in each step; as opposed to half in the standard case.

**Tridimensional analysis**

In today's applications of video delivery over heterogeneous networks, scalability of the transport bit stream is a definitive asset. In such contexts, video encoders are required to adapt to different channel types or conditions, and decoders are requested to select the information they can use in regard to their available computational resources. These constraints have driven to employ the tridimensional wavelet decomposition in video coders. In the 3-D approach, a subband decomposition is applied along the temporal axis of the video sequence; the temporal low-pass subband, where most of the image energy is concentrated, is then submitted to a 2-D wavelet transform.

With tridimensional wavelet decomposition, both spatial and temporal aspects of the video signal are analysed. The results of this analysis can be exploited in two ways: first to minimize the quantity of information to transmit in discarding less relevant data, second in representing the video signal at multiple levels of resolution, and thus adding an important feature to the video signal: spatial and temporal scalability [EPO 03 028 540.7].

**Prior Art**

In computing the 2-D wavelet decomposition in real time, it is difficult to limit from long computing times, high control complexity, and large needs of memory space. Different approaches can be used to reduce one or another of those parameters, as it is done in prior art (refs [4] to [11]). Processing by levels can be started on the very first data sample, thus reducing the input storage, but the entire low resolution blocks are stored in memory for the subsequent levels, which represents the equivalent of an image-sized memory. Block-based wavelet processing, where the input image is reduced in smaller blocks, reduces local memory; however the whole image needs to be stored at the input; furthermore it introduces artifacts at the block boundaries. Computing of the video samples "As Soon As Possible", is another method, but constraints the data out of real time in intermediate levels to process it at appropriate moments; this approach has also the drawback of adding complexity in controls and data structures because it introduces irregularities in the computing pattern. To reduce processing complexity, conventional architectures interleave the filter processing so that it produces alternatively the low-pass then the high-pass filtering of the data; this has the drawback of interleaving the coefficients at the output and requires a more complex addressing scheme.

Furthermore, prior art methods for implementing a 2-D wavelet transform fail to take into account the latency involved in such calculations. In all cases, the video signal is stored either before the first stage of processing, or after the processing is done, or still in between the different stages to accommodate the scheduling of the processing units. The resulting latency in such systems remains, at the very minimum, of a whole frame. At worse an image is stored at the system's input, processed and stored again at the output.

Most video wavelet-based systems in prior art are still 2-D oriented. The video signal is analysed through a wavelet transform, but time redundancy between the consecutive frames is not exploited. When it is the case however, either the 2-D wavelet is computed on frame differences, or the processes of wavelet decomposition and temporal coding are separated from one another: a frame is transformed in the space dimension by successive filtering through a wavelet, then it is compared to a previously processed frame. As for real 3-D video coders, they suffer very long latencies since the signal is delayed by at least a frame to perform the temporal wavelet analysis.

An object of the present invention is to provide the first stages of a video encoder, namely a spatio-temporal representation of a video stream, and this with a minimal latency; in reverse from a spatio-temporal representation, it is another object of the present invention to reconstruct the video stream with minimal latency. A further object of this invention is to exploit both spatial and temporal redundancy of the signal and to provide an output signal that is scalable in space and time. Yet another object of the present invention is to offer an architecture of scalable complexity that can be fabricated in a single monolithic substrate.

The device as claimed in main claim 1 and the dependents claims fulfills the invention objects.

The present invention describes a low-latency real-time implementation of a bidimensional wavelet transform for performing the decomposition of a video signal on a number of stages of resolution; the wavelet decomposition is followed by a time predictor. The design insures that a minimal delay is introduced in those first steps of the compression chain. In this manner, the overall latency of the system can be controlled and limited. The wavelet transform takes a video stream on its input and sends the wavelet coefficients on its outputs. The time prediction starts a few cycles after the beginning of the image and sends quantified coefficients to another unit, not part of the invention, for encoding the bitstream. The input stream includes the luminance and chrominance components of the video signal; the luminance and chrominance video components will be processed as a single stream, using the same filter banks.

In a preferred embodiment of this invention, the system runs at a rate of n times the input sample rate so as to process the n-level transform in real-time without any storage of the real time components. The only storage required is for the delayed inputs and outputs of the filter bank, as needed by the specific wavelet function chosen. In reverse, the associated video decoder performs the inverse operations: after an inverse quantization and time prediction, the wavelet coefficients are synthesized by an inverse wavelet transform and the video signal is reconstructed with minimal delay.

The invention will now described with the help of attaching figures.

**Brief description of the drawings**

Figure 1: Encoder general architecture, forward wavelet transform and time prediction

Figure 2: Decoder general architecture, time prediction and inverse wavelet transform

Figure 3: Horizontal pass followed by vertical scan of the image for a one level 2-D wavelet transform

Figure 4: Frequency representation of image after a wavelet decomposition on three levels.

Figure 5: Forward wavelet transform architecture block diagram

Figure 6: Chronogram showing input signal, processing slots in processing units, and feedback line timing for a video input at full rate.

Figure 7: Chronogram showing input signal, processing slots in processing units, and feedback line timing for a video input at half rate.

Figure 8: Encoder time prediction block diagram.

Figure 9: Decoder time prediction block diagram.

Figure 10: Forward wavelet transform horizontal stage and controls

Figure 11: Processing units computing slots on 128 cycles for video input down-sampled by two. The figure shows the half-rate video input, a table displaying processing unit cycles, and a table showing the control ROM arrangement.

Figure 12: Forward wavelet transform vertical stage and controls

Figure 13: Wavelet filter block diagram.

**Detailed description of the drawings**

**3-D Analysis**

The purpose of the wavelet decomposition is to represent the video frames by their frequency content so as to be able to suppress the spatial redundancy present in the signal. In the time dimension, the recurring information present in the succession of video frames, is extracted by temporal prediction.

Our proposed architecture for an optimal implementation of this algorithm is detailed in the paragraphs below. First the global architecture and its main focus are presented, then will be described in details the scheduling, control, processing elements and memory.

**Data-driven processing**

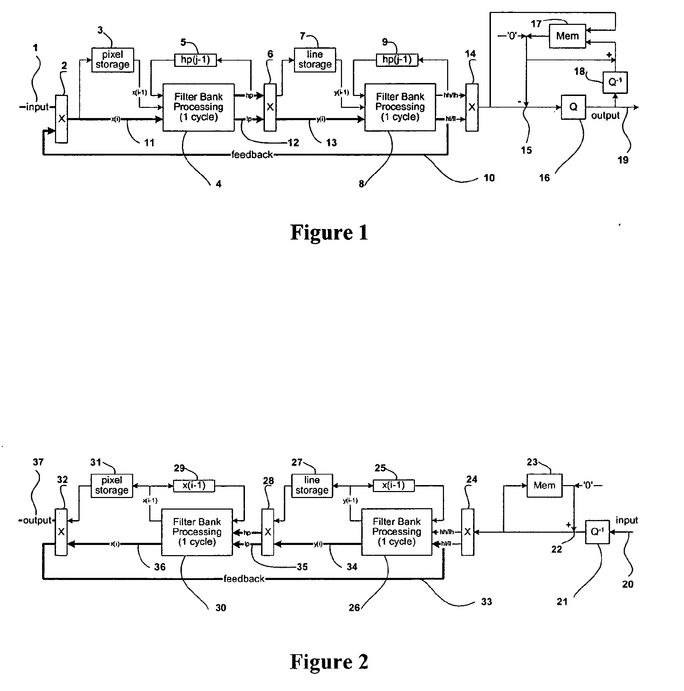

This paragraph describes the global transform architecture. Global architecture for the encoder is schematized on Figure 1. To insure minimal delay, the design focuses on the data processing. The input video stream **1** flows through the processing units **4** and **8** that compute the filter bank. Part of the filtered output is redirected back on bus **10** to the same processing units for recursively performing the wavelet transform on several levels of resolution. The rest of the decomposition, as soon as it appears on the wavelet transform's output, is compared in **15** with the frequency representation of the previous frame stored in unit **17** of the time predictor. The system sends, on the output of **16,** a quantized time predicted frequency representation of the video signal. Elements **3, 5, 7** and **9** retain the filters' past inputs and outputs, multiplexers **2, 6** and **14** control the coder's data path and busses **10, 11, 12** and **13** constitute the main system's loop.

In the decoder, pictured on Figure 2, the input are the quantized wavelet coefficients **20.** They are first passed through the inverse quantizer **21** using the same tables that have been used in the coder. The coefficients reconstructed in **22** are sent through the processing units **26** and **30** of the inverse transform and stored at the same time in unit **23,** for prediction of the following frame. The reconstructed images of all levels are time-multiplexed with the input of the inverse transform on bus **33,** to be recombined with the other bands of the same level of resolution. This iteration stops when the image is fully reconstructed. Units **25, 27, 29** and **31** retain the filters' past inputs and outputs, multiplexers **24, 28** and **32** control the decoder's data path, and busses **33, 34, 35** and **36** constitute the main system's loop.

The system is synchronous with the data rate and uses a global clock that is a multiple of that rate. In the present invention, the clock is generated locally, resynchronized on the one delivered by the video encoder. What is referred to as a time slot, or clock cycle in the following description designates the time cycle of the system's global clock.

Our architecture stresses three main points: first the scheduling is derived from the data and the operations it demands; our architecture focuses on a data driven implementation. The two next points come in order to comply with the first requirement: (1) processing units must execute in one clock cycle and (2) no delay is imposed on the data, which saves storage space and reduces latency.

As explained earlier, multi-resolution analysis is implemented using a two-channel filter bank composed of a high-pass filter and a low-pass filter. The high-pass, that applies the wavelet function to the signal, effectively isolates the high frequency components of the image. The low-pass filter, acts as a decimator that limits its frequency content. This parallel filtering decomposes the image into two subbands: the low-passed signal, that is a half scale approximation, and the high-passed output that contains the detail signal.

This process is extended to multiple dimensions by working the filter bank in the two dimensions of the image, horizontally then vertically. As illustrated in Figure 3, after the horizontal filtering, where the original image has been scanned in the horizontal dimension and filtered, the image is cut in two subbands: **lp** and **hp**. After one vertical scan and filtering, the two subbands are themselves each decomposed in two subbands; so that after one complete pass, that is one horizontal and one vertical scan through the filter bank, the image is cut into four blocks: the block that went through the high-pass filter both horizontally and vertically is labeled **hh**, the block issued from one horizontal high-pass and vertical low-pass is labeled **hl,** the horizontal low-pass'output generates the two blocks **lh** and **ll** respectively after high-pass and low-pass filtering in the vertical dimension.

The reverse operation is done in the same manner: the four blocks are first scanned vertically to be recombined two by two **ll** and **lh** then **hl** and **hh.** They are reconstructed into two subbands **lp** and **hp.** These two subbands are fed into the horizontal unit of the inverse transform to regenerate the original image.

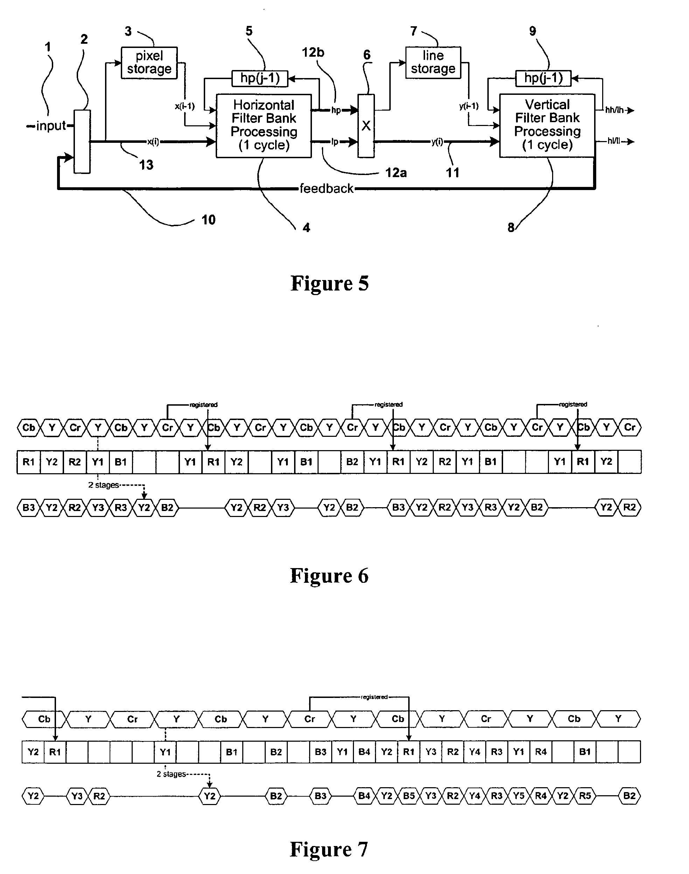

Figure 5 illustrates the implementation of the forward process. One pass, i.e. one level of resolution of the wavelet transform, is implemented in two stages; first the horizontal and second the vertical filter banks are computed. In a preferred embodiment of the present invention, each stage is processed by one filter bank processing unit, although a unique filter could be used for both stages and such an implementation would be part of the present invention.

The filter bank processing elements **4** and **8** perform the low-pass and high-pass filters required in the wavelet computation. Their complexity, number of arithmetic operations and number of operands they use, depends on the kind of wavelet implemented. The wavelet's size determines the amount of storage in the pixel storage unit **3** and line storage unit **7** of Figure 5. The filter's feedback storage units **5** and **9** are used only when the wavelet implemented can be factorized by lifting steps. The filter bank processing units **4** and **8** work as data-triggered systems, and are running at a multiple of the global clock. They execute in one global clock cycle time and send in parallel the two outputs of the low-pass and high-pass filters. In the description that follows, the most simple wavelet is used; in this case, the filter bank works on only two operands, $x(i-1)$ and $x(i)$ and do not use any past output value storages **5** and **9.** The operation principle is exactly as described below for a more complex filter bank.

The input of the first horizontal filter bank **4** is connected either to the output of a decimator, when the sample rate has to be reduced, or directly to the video stream, input of the system. The image is scanned horizontally, and appears at the input one line after the other. In order to decimate the filtered output by two, the filter bank operates on every other sample of each line. The next sample of the line is stored in the pixel storage unit.

The second computing stage, the vertical filter bank **8,** is connected to the **lp** and **hp** outputs of the horizontal filter bank through multiplexer **6.** The filter bank now works in the vertical dimension and therefore needs the current horizontal filter output and the output issued on the previous line. The previous line is held in the line storage element **7** of Figure 5. To decimate the filtered output by two as in the previous stage, every other line of **hp** or **lp** is computed. For that reason, the same filter bank can be used to process alternatively the **lp** or **hp** output of the horizontal filter. Thus, for every video input and feedback line, only one horizontal output, either **lp** or **hp,** is computed, while the other horizontal output is simply buffered and this for all samples in the input and feedback line. The horizontal filter bank's output that is not processed, immediately replaces in 7 the coefficient that is concurrently used in the computing of the other horizontal filter bank's output. Thus, at any time, line buffer **7** contains only one line of **hp** or **lp** coefficients issued from the horizontal processing. The vertical filter bank processing **8** sends on its output terminals the two quadrants **hh** and **hl** on every subband's even line and the **lh** and **ll** quadrants on every subband's odd line for each pass.

On the very first line of a frame, the horizontal output **hp** is processed by the vertical filter bank, although no previous line could have been stored in the line buffer. In this situation, the current output coefficient **hp** of the first line is used in the filter bank both as x(i-1) and x(i).

The **ll** block represents a scaled down version of the image, $1/4^{th}$ the surface of the original frame as represented in the squared gray block of Figure 3. It contains all the frequencies that have not yet been separated. It will be processed again for another level of decomposition, while the detail coefficients resulting from the application of the high-pass are sent to the time prediction unit. To distinguish between different levels of resolution, the blocks are labeled with their decomposition level as indices. The $ll_k$ block is the low representation of the input image at decomposition level **k,** while the other blocks $hh_k$ , $hl_k$ and $lh_k$ represent the selected details of the information visible in the image of the preceding level. The block diagram of Figure 4 shows the result of a three-level decomposition.

To compute this recursion, the **ll** output of the wavelet transform is sent to the first computing stage on the feedback line **10** seen on Figure 5. The components of the lower resolution subband are inserted in the incoming video stream and will at their turn trigger another level of processing. Because the resolution of this band has been reduced by a factor of two in the two dimensions, the **ll** band coefficients use half of the processing time slots left over by the direct stream, and this in the two processing units, horizontal and vertical.

As more levels of decomposition are implemented, they will require each time half of the processing bandwidth used by the previous level; with this intrinsic feature, the system will never be limited by the computing bandwidth. The maximum number of iterations permitted in this implementation depends instead of the time left between two direct video samples for inserting feedback data. As long as there is space to alternate direct input samples and feedback path on a single stream, there will be bandwidth available in the processing units to compute them.

Data-driven processing imposes the availability of a computing time slot upon the arrival of a sample. In other words, since no storage is placed neither in the input nor in the feedback path, a data cannot wait for previous processing to be completed. Therefore the maximum number of wavelet transform levels in our device equals the ratio of the input sample rate over the system's global clock. For example if the input stream is sampled at a quarter of the video clock, and the system runs at the video clock's rate, then four levels of iteration can be processed.

The originality of this implementation lies in the immediate processing: as processing is triggered on the arrival of data, no waiting time is introduced in the main computing loop. This means also that, except for the passed filter input and output values required in the filter banks, no storage is necessary. On Figure 5, the path drawn in bold lines composed of busses **10, 11, 12** and **13,** is never registered or buffered. In the same manner, the decoder's main loop composed of busses **33, 34, 35** and **36** (figure 2) does not sustain any delay. Samples are only delayed by one cycle in each of the two filter bank processing units **4** and **8,** or **26** and **30** of the decoder, for a total of a two-cycle delay before being stored or recursively computed again. This time-delay is independent of the kind of wavelet used in the filter banks.

With the data-triggered processing scheme, the totality of the multi-level transform output is completely computed only a few clock cycles after the last video sample of a frame has entered the system.

**Multi-stream processing**

Let's examine further the processing requirement of an input stream sampled at fourth of the main system's clock. After the input stream triggers the first computing stage, ie on the second sample of the stream, the low resolution components of the **ll** band starts to appear on the feedback line two cycles later; at its turn, the second level of iteration triggers computing in the first stage two cycles after the direct sample (the last direct sample needed to resolve it). Thus the processing units are actually occupied at most on every other slot. Because of the second stage computing delay, there is always a computing time slot unoccupied in between the direct stream and the feedbacks it generates.

Note that because only every other sample induces processing, the space left between two direct samples still allows for four levels of iteration as mentioned earlier. At one-fourth the clock rate, eight cycles pass between two direct samples' computing, and during these eight cycles, only every other computing slot is used. Therefore, the direct sample and three feedbacks can be computed for four levels of iteration.

Every other cycle of the computing units is then used for another stream formed with the chrominance components of the video stream. In a video signal 4:2:2 formatted, the luminance arrives at half the video sampling rate and each of the two chrominance components is sampled at a quarter of that rate, or half the luminance rate. Therefore the same processing units are able to process the three streams formed by one luminance and two chrominance signals.

The **Y, Cb, Cr** signals of ITU-R 601 are multiplexed in the following way: **Cb, Y, Cr, Y, Cb, Y, Cr,** ... where samples run at the video rate of 27MHz. In this format the luminance has been sampled at twice the rate of the chrominance. The quadruplet (Cb, Y, Cr, Y) represents two pixels sharing the same chrominance information.

To correctly process the two components of the chrominance stream, and keep the pixel coherency, a new stream is built at the input of the first stage of computation. The chrominance component **Cr** is registered and replaced in the stream on every other **Cb.** In that manner, the stream **Cr** becomes part of a new stream **Cb**; in this new stream, samples are placed in such a way that either **Cb** or **Cr** triggers computing. One of the couple **Cb, Cr** is stored while the other one is processed. The two chrominance streams are processed as if a single one twice the frequency.

On top of Figure 6 is a video signal multiplexed with luminance and chrominance signals as in the standard ITU-R BT 601 format. The bottom line shows the output of the wavelet transform sent on the feedback line. It is the result of the input signal processed through two stages of filtering. On the middle line in the same figure, each square represents a computing slot of the filter bank processing unit. It shows the arrangement for computing stage 1, the horizontal stage. Stage 2, not represented, sees exactly the same pattern delayed by one time slot. In this diagram, the luminance is sampled at half the global clock rate. The processing units are used on two iterations on three streams each time; **Y1, B1, R1** are the three streams of the first transform level corresponding to the video signals **Y, Cb** and **Cr;** the outputs of the first transform level, **Y2, B2** and **R2,** come from the feedback line and are processed again (here they are components of the **II** band only, since this is the only subband that is recursively processed). It can be seen on this figure that there will not be enough slots in the processing units to compute a third level; **Y3**, **B3** and **R3** cannot be processed because at full video rate, there is enough bandwidth in the system for a two-level decomposition only.

The next chronogram on Figure 7, displays the same situation on a video stream down-sampled by two. Here, up to four levels of decomposition can be processed. This snapshot is taken at a moment of full occupancy of the processing units (once every 128 cycles on every sixteenth line in that case).

The two timing diagrams demonstrate also how the second chrominance signal, **Cr**, is delayed to fall on the holes of the first chrominance signal **Cb**, and takes advantage of the unoccupied processing slots.

The decompression circuit functions in exactly the same way, but the signal flow is reversed. Its mode of operation is not further discussed here since it is easily deduced from the forward transform description.

**Temporal Coding**

The fact that pictures often change little from one frame to the next is exploited in temporal prediction. In the temporal coder, a succession of reference and difference frames (or intras and predicted frames) is sent out, so that the unchanging part of the image (like the background) is less represented in the coded stream.

The output of the temporal coder is processed by a variable length coder that is not detailed in this invention, as there are many standard ways to realize such a coder. The elements examined in this section are meant to stress what differentiates our invention from previous realizations. The first point of difference is that temporal redundancy filtering is done in the frequency domain. The advantages of a frequency-domain temporal filtering are explained in details in [EPO 03 028 540.7]. The second main novelty of our invention is that the temporal coder is embedded in the wavelet transform in such a way as to minimize the system's latency. The third important point in the present invention is that different prediction modes and patterns can be selected on a very fine grain and controlled dynamically.

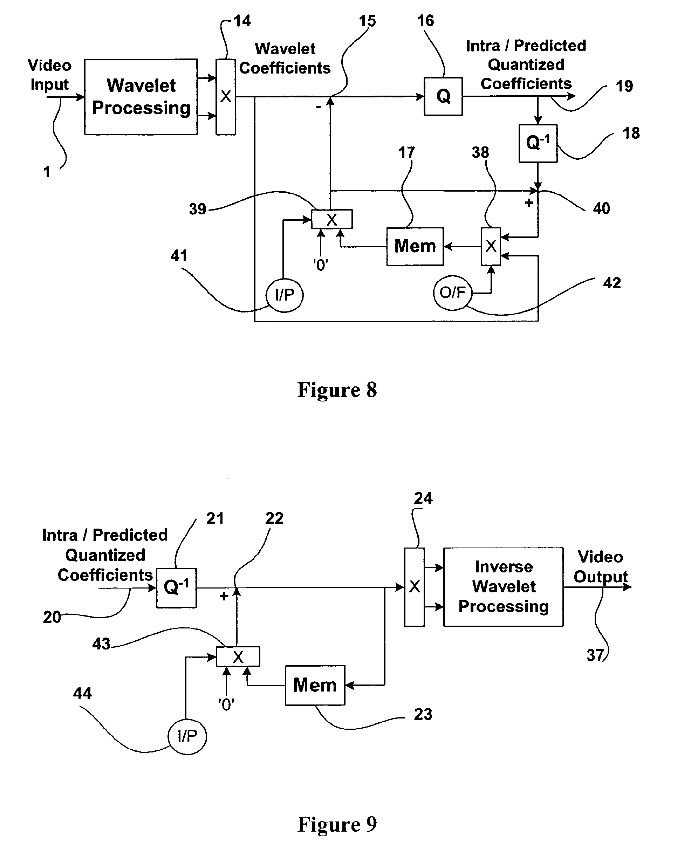

The time predictor is illustrated on Figure 8. The input of the temporal coder is connected to the wavelet transform output through the multiplexer **14.** To control the latency of the system, results of the wavelet transform are sent as soon as available. The two output lines of the transform are multiplexed in **14** so that the time predictor can treat all the transform coefficients as a stream. The stream is sent to the time predictor where each coefficient is temporally predicted in the transform domain from its previous corresponding coefficient.

The time predictor operates in two different modes: intra or predicted. The dedicated control **41** can switch the temporal coder in one or the other of these two modes dynamically. In prediction mode, the coder subtracts a reference from the wavelet coefficient in **15** to form a difference or prediction error signal. In intra mode, a reference coefficient is passed directly (multiplexer **39** forces the prediction bus to zero). The prediction error or intra coefficient is quantized in the quantizer **16,** and this quantized value forms the output **19** of the temporal predictor.

Each subband or even each individual coefficient may be predicted in intra or predictive mode according to the state of the I/P switch **41.** The simplest prediction scheme is to predict a coefficient from the same coefficient in the reference frame. In this case the predictor would comprise simply the storage of exactly one frame. The present invention does not constraint the prediction scheme to be one type or another but on the contrary the architecture is flexible enough to adapt to many other schemes. For example, the prediction can be done by layers, using a dyadic prediction to provide temporal scalability. The prediction mode can be controlled with different granularity depending on the complexity of the encoder; intra/predictive mode can be selected on each coefficient or on each subband. On the other end, time prediction can be bypassed in keeping the switch **41** in intra position.

The reference coefficient used in the prediction's comparison can be of two different sources: either the reference is the wavelet coefficient directly stored in memory, or it is the value of a coefficient as it would be predicted in the decoder. These two models are implemented using an open or closed prediction loop. In the open loop configuration, the wavelet coefficients are stored directly into the memory **17** and the difference between a chosen reference frame and current frame is quantized. In that mode, the predictions are different in the encoder and in the decoder and the reconstructed video signal slowly deviates from the original. This effect disappears in the closed loop setting, where the reference frame in **17** is taken as the result of the previous prediction, thus replicating the situation at the decoder side with the inverse quantizer **18** and the adder **40.** The decoder follows exactly the encoder in the reconstruction of the video stream. Closed or open loop mode is set by one or the other position of the O/F switch **42** on Figure 8; this switch directly controls multiplexer **38.** As in the I/P control, the loop mode can be controled dynamically and with different granularity, on the subband's level or coefficient's level.

In both cases, open or closed loop at the encoder, the decoder's time predictor recomposes the coefficients in the same way: the decoder's input values on bus **20** are de-quantized in **21,** and the resulting values modify a reference frame stored in **23** in prediction mode, or are directly sent to the inverse transform in the intra mode as directed by the I/P switch **44.** The switch **44** is directly controlling the multiplexer **43** passing the output of memory **23** or forcing the bus to zero. The decoder always uses an intra or previous prediction as its prediction reference, and operates independently of the prediction's reference used in the encoder. Therefore, the reference storage mode does not need to be transmitted from encoder to decoder. The decoder's block diagram is given on Figure 9.

**Scheduler**

The wavelet processing loop and the time predictor are controlled to run continuously as long as there are samples to process. The scheduler controls the sequencing of operations and the routing of data in the main loop or to storage units.

There are several levels of scheduling. They are detailed in the following order: first, the line level scheduling, then the column and image level control and finally, the servicing of each sample.

In ITU-R BT 601 format, a line is composed of 720 doublets **C**, **Y** (pixels) for a total of 720 luminance components **Y,** and 360 of each of the chrominance signals **Cb** and **Cr.** A line is cropped of 8 pixels on each side, so that the **M** number of pixels in a line becomes a multiple of a power-of-2 ($704 = 11 * 64 = 11 * 2^6$). After a block of $2^P$ input samples, where **P** is the total number of passes, the horizontal output is complete, meaning the last pass' component has been calculated. The chrominance circulate at half the luminance rate so a block of $2^{P+1}$ pixels is needed for the completion of the first chrominance coefficients at the last level of resolution. Therefore with a line whose number of pixels is a multiple of $2^6$, all streams will be totally processed in a wavelet transform of up to 5 levels of resolution. Cutting **M** to a power-of-two multiple relaxes the complexity of operations sequencing at the line level.

The number of lines varies depending on the video format considered. Two lines of the previous pass are needed to compute the next one, so that overall, $2^P$ lines are enough to compute P passes of the transform. Calling **N**, the number of lines in a video field, it can be written as:

$$N = Kr * 2^P + R,$$

where **Kr** is the number of blocks of $2^P$ lines and **R** is the rest of the division. The number of lines of any pass in the output blocks can be calculated with

$$N_j = (Kr * 2^P + R)/2^j = Kr * 2^{P-j} + int(R / 2^j);$$

**P** is the total number of passes in the transform, **j** the level concerned and **R** the rest of the division of **N** by $2^P$. All this equation says is, at one level **j**, there will be a line calculated every $2^j$ lines. In other words, if after division by two, there is an extra line in one level, no computing will be done on this extra line on the next level. In this manner a 288-line image give blocks of 144/72/36/18/9/4 after calculations on 6 levels, a 240-line image gives blocks of 120/60/30/15/7 lines if calculated on 5 levels.

The sample level service consists in controlling the processing units' supply and serve them the right samples at the right time. It is actually resumed in the controlling of the processing input lines and the right circulation of passed values in the storage units. The controls differ in the stage 1 and stage 2 sections because both work with an unlike memory arrangement. They only have in common that their control is divided in three states: state 0, the first state is for data preparation, state 1, computing state during which the computing units are busy and state 2, the last state that marks the availability of the filtered data.

The first computing stage actually initiates the timing of the whole computing loop. Horizontal state 0, **hstate0,** is active on a combination of sample and line numbers so as to define a different sample slot arrangement on every line, for the incoming video samples and several levels of resolution. Combined with a cycle map, it defines the mode of operation for every single cycle in a frame. In addition, **hstate0** triggers the whole computing chain for each sample, in the wavelet transform and in the time predictor. So that finally this state alone commands the timing of the system. A signal issued from **hstate0** is combined with a slot map and line numbers to valid the resolution level: level 1 on every line, 2 every 2 line etc.

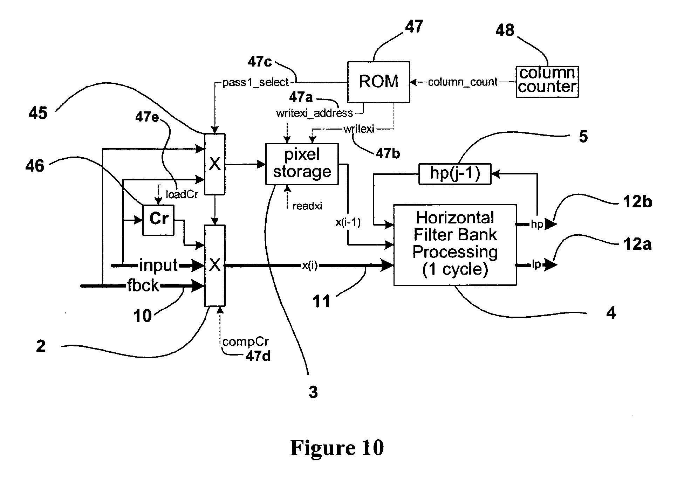

In the horizontal processing, there are several elements to control as shown in figure 10. The input multiplexer **2** selects between the direct input, the feedback line, or the registered chrominance component **Cr** (registered to be placed in **Cb** stream). Pixel storage **3** is a register file that retains the necessary past values of each stream; its input is also connected to the video input of the feedback path through the multiplexer **45.** The basic three components, **Y, Cb** and **Cr,** have been each decomposed into as many streams as there are levels of decomposition; stage 1 register file **3** must store 3*P words (P is the total number of levels). The storage unit **5** retains the previous **hp** value when needed in filter bank calculations. Finally **Cr** needs to be registered in register **46** and passed through the input multiplexer **2** at the appropriate time. Control of these five elements **2, 3, 5, 45,**and **46** fully addresses the filter bank processing unit that has only data on its inputs and outputs.

The address to access the register files **3** and **5** during the read operations, is directly connected to the lower bits of the column counter **48;** for each slot (each column) is affected a specific data, and the data needed by the processing unit **4** at a particular slot is to be found at the matching address in the register file. This indirect addressing is performed in the control ROM **47;** along with other signals, ROM **47** provides the correct write address **47a** (writexi_address) for each data to retain. The same ROM stores the two signals **47c** and **47d** (pass1_select and compCr) controlling the multiplexers **2** and **45 ,** and the register file write signal enable **47b** (writexi). The ROM read address also is linked to the column counter **48.** The control of Cr register **47e** (loadCr) comes from decoding of the column counter **48.** Finally the write address of the storage **5** is connected to the column counter (with correction on Y1) and the **hp** data is sent to storage **5** at the end of a computing cycle on state 2.

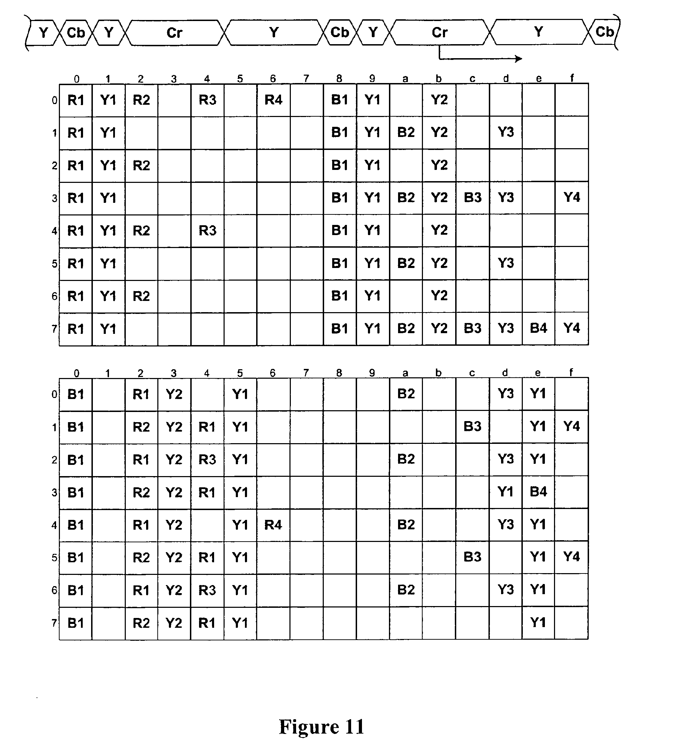

The computing slots mapping is defined this way: the same pattern of data, luminance and chrominance, through the processing units repeats every $2^{P+1}$ pixels block; the system's clock runs at P times the input rate. Therefore, there are (P * $2^{P+1}$) clock cycles (or processing slots) to be defined in order to control the transform of a whole line. The 128-cycle storage pattern required for a four-level transform is detailed in Figure 11. In this diagram, the first line represents a video input signal down-sampled by two (for 360 pixels per line reduced to 352). The table on top maps computing slots and components issued from the above video line: 128 slots available in the processing unit, and 12 streams to process, Yk, Bk (the Cb stream) and Rk (the Cr stream), where Yk is the component Y on level k, and where k goes from 1 to 4, for four levels of interation.

The table on the bottom maps the components to be stored, namely every other element of each stream, to a slot number. The actual map stored in ROM uses the same component arrangement, and gives the slot number of the next sample in the same stream and consequently, the slot number the pair should be processed on. This slot number becomes the register file's **3** write address. The read address being controlled by the column counter, the register file effectively outputs the dual of the component present on the processing unit's input line. Note that for the Y1 stream, the fourth bit of the address is not used.

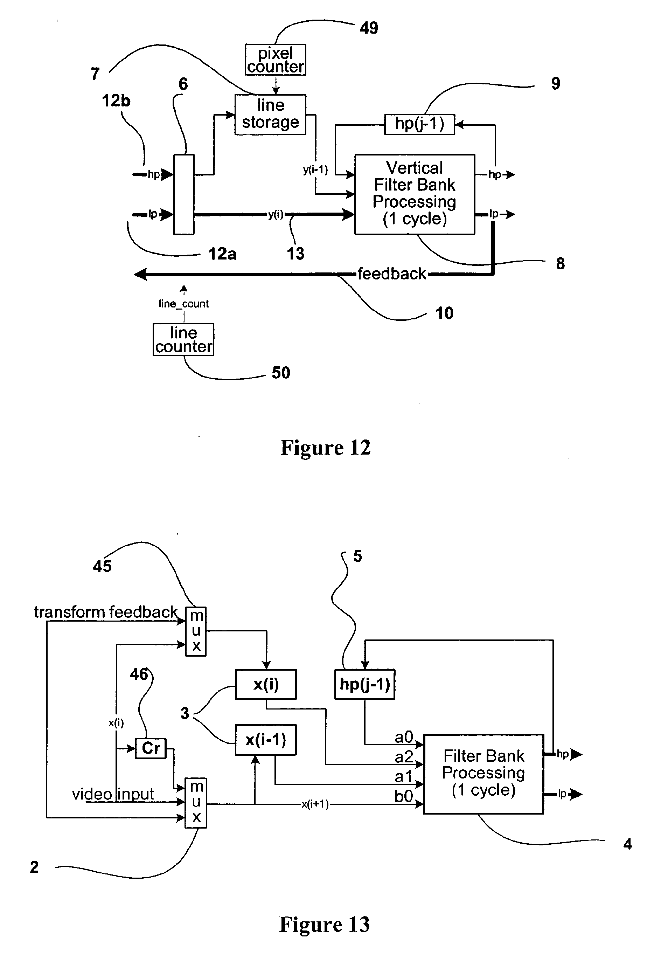

Stage 2 is pictured on Figure 12. The output components of the first stage **hp** and **lp** circulating respectively on busses **12a** and **12b** are fed to the vertical processing. Here the samples are processed in the vertical direction, and a minimum of one previous line needs to be stored in line storage **7** in order to compute the signals from the first stage. As the streams **hp** and **lp** are ready, line after line, they are alternatively stored or processed. One processed sample, **hp** or **lp,** freeing an element of storage in **7,** it will be replaced by a sample of the other stream. The storage element **7** is an on-chip RAM; reading and replacing the data at the same location is done through a read-modify-write. The main control in this section is to dispatch the storage/computing according to their levels. The line counter **50,** along with **hstage0** that trickled down to this level to become **vstage0** on the next cycle, provides enough information to control multiplexer **6** according to the line number and level of decomposition of the one particular component presented at the input of the vertical stage. Each stream is processed in unit **8** accordingly to the place it occupies in its own level of decomposition. In addition a pixel counter per level **49** controls the line storage addresses.

On the last stage, the wavelet transform coefficients coming from the two outputs of stage 2 are sent to the time prediction unit. They are first multiplexed, then substracted by the corresponding coefficient of a reference frame, or zero for an intra, quantized and send to the output. In parallel the output is inverse-quantized and stored in memory in the order received. Each coefficient circulates with a qualifier to mark the band number and level it belongs to. This marker is not stored along with the coefficient as they always come from the wavelet transform in the same order, but used to chose the type of quantization and prediction mode that applies. The quantizer modifies the representation of each number and reduces the number of bits used to approximate its value. Selected by subband type and level of resolution, it can be changed frame by frame for each subband.

**Hybrid Wavelet Transform**

The filter bank processing unit computes the wavelet as a bank of low-pass and high-pass filters. The main constraint on this unit lies in the execution speed: the filters execute in one global cycle time. This can be achieved by duplicating the processing elements required in the filter's equation processing, or by running the same processing elements at a multiple of the clock. In one embodiment of this invention, the clock is multiplied by four to compute the filter in several stages The processing units **4, 8, 26** and **30** use a 108MHz clock, four times the video rate of 27MHz.

The type of wavelet function used in the transform, and therefore the type of filters, determines the complexity and the number of samples required in these processing units. In one particular embodiment of the invention, more emphasis is put on low complexity computing. The filter banks therefore are selected for their low complexity and low number of taps. This is not, however, a requirement in this system, and one could use more complex filters to achieve a higher quality and better resolution.

Furthermore, the storage needed for a particular filter type has quite a different impact whether this filter is used in the horizontal or in the vertical dimension of the image. In the horizontal passes, the number of passed samples required in the filter, depending on the length of the wavelet, is to be multiplied by the number of streams to process. In the vertical dimension however, the same number concerns lines of storage, increasing significantly the memory size. It makes sense in that case to use a hybrid transform, that is a transform where the horizontal and vertical wavelets are different, and for the purpose of reducing the memory, a wavelet shorter in the vertical dimension than the one used in the horizontal passes.

Finally some filter implementations have proven to be more frugal in terms of computing load and memory usage than others. This is the case for the lifting factorization that significantly simplifies the filter bank's computing in using the output of one filter to calculate its mirror one. The wavelet equation is factorized using the result of the high-pass filter to update the low-pass.

In a low complexity implementation of the present invention, the wavelet transform needs very little memory and no multiplications. A (5,3) wavelet is used in the horizontal filter and a Haar wavelet in the vertical filter that will need a single line of storage.

The horizontal filter bank is resolved from the lifting representation of the (5,3) wavelet direct and reverse equations:

$$hp(j) = x(i) - [x(i-1) + x(i+1))] / 2$$

$$lp(j) = x(i-1) + [hp(j-1) + hp(j)] / 4$$

$$x(i-1) = lp(j) - [hp(j-1) + hp(j))] / 4$$

$$x(i) = hp(j) + [x(i-3) + x(i-1)] / 2$$

The original set of equations for the bank of filters associated with the (5,3) wavelet being:

$$hp(j) = x(i) - [x(i-1) + x(i+1)] / 2$$

$$lp(j) = -1/8\ x(i-3) + 1/4\ x(i-2) + 3/4\ x(i-1) + 1/4\ x(i) - 1/8\ x(i+1)$$

It can been seen from this set of equations, that the lifting representation saves memory space, is more spare in terms of number of computations, and does not need any multiplication. The stored input samples necessary for computing the bank of filters is two values in the first case in addition of one feedback value, for a total of three memory locations, versus four in the straight set of equations. One memory location per stream is saved in using the lifting scheme. The whole computing is done in four operations, as there are only four additions or substractions in the two sets of equations. Lastly, the power-of-two multiplicands are performed with shifts and no multiplier is necessary.

Again in order to save memory space, the vertical filter is implemented with a Haar wavelet, its equation being given by,

$$hp(j) = x(i) - x(i-1) \qquad lp(j) = [x(i-1) + x(i)] \, /2$$

and its reverse equation: $x(i-1) = lp(j) - hp(j)/2 \quad x(i) = lp(j) + hp(j)/2$

The processing unit runs on four times the global clock. In computing the above equations in four steps, results are ready in one global cycle. The table below gives the details of the four computing steps in the case of the forward (5,3) wavelet. The inputs a0 to a2 and b0 are connected to the inputs of 4 as shown on figure 13.

| sub-cycle | 0 | 1 | 2 | 3 |
|---|---|---|---|---|
| computes | x(i-1) + x(i+1) | x(i) - sl/2 | h(j-1)/2 + s2/2 | x(i-1) + s3/2 |
| a0 | hp(j-1)/2 | hp(j-1)/2 | hp(j-1)/2 | hp(j-1)/2 |
| a1 | x(i-1) | x(i-1) | x(i-1) | x(i-1) |
| a2 | x(i) | x(i) | x(i) | x(i) |
| b0 | x(i+1) | x(i+1) | x(i+1) | x(i+1) |
| a | a1 | a2 | a0 | a1 |
| b | b0 | sum/2 | sum/2 | sum/2 |
| sum | s1 | s2 | s3 | s4 |
| op | + | - | + | + |

It is clear that longer filters can be used in exactly the same manner, but at the price of more memory and more computation. The scalable complexity of the present invention allows to chose between a simple filter structure for simplicity or a more complex filtering scheme for increased quality. The decrease in image quality resulting from the use of low-resolution wavelets is compensated by the filtering done in the time dimension by the time prediction unit.

**REFERENCES**

[1]- S. G. Mallat, Multiresolution Approximations and Wavelet Orthonormal Bases of $L^2$ (R), Trans. Amer. Math. Soc., 315(1):69-87, 1989;

[2]- S. Mallat: A theory for multiresolution signal decomposition: the wavelet representation, IEEE Transaction on Pattern Analysis and Machine Intelligence, vol.11, p. 674-693, July 1989

[3] - Grossman and Morlet, I. Daubechies, Ten Lectures on Wavelets, CBMS-NSF Regional Conf. Series in Appl. Math., Vol. 61, Society for Industrial and Applied Mathematics, 1992;

[4]- M. Vishwanath. The recursive pyramid algorithm for the discrete wavelet transform. IEEE Transactions on Signal Processing, 42(3): 673 {676, March 1994.

[5]- T. C. Denk and K. K. Parhi. LSI Architectures for Lattice Structure Based Orthonormal Discrete Wavelet Transforms. IEEE Transactions on Circuits and Systems, February 1997.

[6]- N. D. Zervas, G. P. Anagnostopoulos, V. Spiliotopoulos, Y. Andreopoulos, and C. E. Goutis: Evaluation of Design Alternatives for the 2D-Discrete Wavelet Transform

[7]- Analog Devices. Low Cost Multiformat Video Codec, ADV601, 1997. Data Sheet.

[8]- C. Chakrabarti and C. Mumford. <u>Efficient realizations of encoders and decoders based on the 2-D Discrete Wavelet Transform</u> Accepted for publication in the IEEE Transactions on VLSI Systems, 1998.

[9]- P. Cosman and K. Zeger. <u>Memory Constrained Wavelet-Based Image Coding</u> Signal Processing Letters, September 1998.

[10]- I. Daubechies and W. Sweldens, <u>Factoring wavelet transforms into lifting steps,</u> Journal of Fourier Analysis and Applications, 4(3):247-269, 1998.

[11]- C. Chrysafis and A. Ortega. <u>An Algorithm for Low Memory Wavelet Image Compression.</u> Proceedings of the International Conference on Image Processing, ICIP99, Kobe, Japan, October 1999.

**Claims**

1. A video compression circuit comprising:

   - a video input (1) that receives an input video signal
   - a transform module **(2-13),** connected to the input and equipped to decompose a series of n input images, each into four subbands,
   - a time prediction module **(14-18)** that computes a time prediction of each subband
   - a quantized data output bus that sends the output signal out **(19),**
   - where one of the said four subbands becomes the next image in the series **(10),** and where the three other subbands are sent to said next module of time prediction **(14-18),** and where said series of n images are interleaved on said transform module's input stream **(11).**

2. A video decompression circuit, dual of claim 1, comprising:

   - an input **(20)** that receives the quantized coefficients
   - a time prediction module **(21-24)** equipped to de-quantize the coefficients and compute a time prediction of each subband
   - an inverse transform module **(25-32)** connected to the time predictor's output, equipped to reconstruct a series of n arrays of four subbands, each into an image, where said reconstructed image is fed back to the inverse transform input **(33)** and becomes the fourth subband of the next level of reconstruction.
   - a video output **(37)** that sends the output signal out

3. A video compression circuit according to claim 1, equipped to filter the video input by a decimator that decimates said video input by two.

4. A video compression circuit according to claim 1, where the transform module is equipped to run at n times the input stream sampling rate for decomposing a series of n images, each into four subbands **(ll, lh, hl** and **hh),** where one of the four subbands **(ll)** becomes the next image in the series, and where the three other subbands **(lh, hl** and **hh)** are sent to the next module, and where said series of n images are interleaved on said transform module's input stream.

5. The video compression circuit according to claim 1, where the transform module is equipped to operate on two alternating stages, one horizontal filtering stage **(4)** and one vertical filtering stage **(8);** on said horizontal filtering stage an image is filtered in the horizontal dimension to be decomposed into two subbands **(lp** and **hp),** and on said vertical stage, one of the said horizontal subbands **(lp** or **hp)** is filtered in the vertical dimension to be decomposed into two other subbands **(ll, lh** or **hl, hh)** while the other said horizontal subband is stored in a buffer **(7),** this process alternating on every subband's line.

6. The video compression circuit according to claim 1, where the transform module is equipped to operate on two alternating filtering stages and where two said stages of filtering are each performed by a filter bank processing unit **(4** and **8),**

   - said filter bank processing unit is equipped to compute a perfect reconstruction filter bank composed of two filters, one low-pass and one high-pass operating in parallel, and said filter bank is equipped to execute in only one cycle time,
- said filter bank is equipped to operate in alternance on a luminance stream and on a chrominance stream,
- said luminance stream being composed of the original image's luminance components and the luminance components of the images resulting from the successive low-pass horizontal filtering stage and low-pass vertical filtering stage at each level k $(\mathbf{II_k})$,
- said chrominance stream being composed of the original image's chrominance components and the chrominance components of the images resulting from the successive low-pass horizontal filtering stage and low-pass vertical filtering stage at each level k $(\mathbf{II_k})$.

7.  The video compression circuit according to claim 1, where the transform module contains a main loop **(10-13)**, said main loop is composed of the video input and the system's feedback **(10)**, and video components placed on said main loop are not submitted to any delay apart from the computing delays.

8.  The video compression circuit according to claim 1, where the time prediction unit is equipped to operate on the wavelet transform's output as soon as available.

9.  The time prediction unit according to claim 8, comprising a control input equipped to select between several time prediction modes, and where any pattern in the succession of time prediction modes can be chosen for each coefficient or for each subband.

10. The time prediction unit according to claim 9, comprising a control input equipped to select for each reference value stored for the prediction to be either the wavelet coefficient or the predicted coefficient as would be seen on the decoder side, this selection being made for each coefficient or for each subband.

11. The video decompression circuit according to claim 2, comprising a control input equipped to select between several prediction modes, and where any pattern in the succession of time prediction modes can be chosen for each coefficient or for each subband.

12. The time prediction unit according to claim 11, where the prediction selection can be based on transmitted information or on predeterministic patterns.

13. The video decompression circuit according to claim 2, where the inverse wavelet transform is equipped to operate on the output of the time prediction unit as soon as available.

14. The video decompression circuit according to claim 2, where the inverse transform module is equipped to run at n times the input stream sampling rate for reconstructing a series of n arrays of four subbands **(ll, lh, hl** and **hh)**, each array into an image, where said reconstructed image is fed back to the inverse transform input and becomes the fourth subband **(ll)** of the next level of reconstruction.

15. The video decompression circuit according to claim 2, where the inverse transform module reconstructing n arrays of four subbands is equipped to operate on two alternating stages, one vertical filtering stage **(26)** and one horizontal filtering stage **(30);** on said vertical filtering stage the coefficients of two subbands among four **(ll, lh** or **hl, hh),** are combined into one intermediate subband **(lp** or **hp),** part of which is stored in memory **(27)** while other part is passed to said horizontal stage, this process alternating on every input subbands' line; on said horizontal stage, two said intermediate subbands **(lp** and **hp)** are filtered horizontally to reconstruct an image.

16. The video decompression circuit according to claim 2, where the inverse transform module is equipped to operate on two alternating stages and where two said stages of filtering are each performed by a filter bank processing unit **(26** and **30),**

- said filter bank processing unit is equipped to compute a perfect reconstruction filter bank composed of two filters, one low-pass and one high-pass operating in parallel, and said filter bank is equipped to execute in only one cycle time,
- said filter bank is equipped to operate in alternance on a luminance stream and on a chrominance stream,
- said luminance stream being composed of the original coefficients' luminance components and the luminance components of the images resulting from the successive low-pass vertical filtering stage and low-pass horizontal filtering stage at each level k $(\mathbf{II_k})$,
- said chrominance stream being composed of the original coefficients' chrominance components and the chrominance components of the images resulting from the successive low-pass vertical filtering stage and low-pass horizontal filtering stage at each level k **(II$_k$).**

17. The video decompression circuit according to claim 2, where the inverse transform module contains a main loop **(33-36),** said main loop is composed of the input coefficients and the system's feedback **(33),** and components placed on said main loop are not submitted to any delay apart from the computing delays.

18. The video decompression circuit according to claim 2, equipped to filter the output by an interpolator that upsamples the inverse transform output by two.

**Figure 1**

**Figure 2**

| lp | hp |
| --- | --- |

| ll | hl |
| --- | --- |
| lh | hh |

**Figure 3**

| ll3 | hl3 | hl2 | hl1 |
| --- | --- | --- | --- |
| lh3 | hh3 | | |
| lh2 | | hh2 | |
| lh1 | | | hh1 |

**Figure 4**

**Figure 5**

**Figure 6**

**Figure 7**

**Figure 8**

**Figure 9**

**Figure 10**

Y / Cb / Y / Cr / Y / Cb / Y / Cr / Y / Cb

| | 0 | 1 | 2 | 3 | 4 | 5 | 6 | 7 | 8 | 9 | a | b | c | d | e | f |
|---|---|---|---|---|---|---|---|---|---|---|---|---|---|---|---|---|
| 0 | R1 | Y1 | R2 | | R3 | | R4 | | B1 | Y1 | | Y2 | | | | |
| 1 | R1 | Y1 | | | | | | | B1 | Y1 | B2 | Y2 | | Y3 | | |
| 2 | R1 | Y1 | R2 | | | | | | B1 | Y1 | | Y2 | | | | |
| 3 | R1 | Y1 | | | | | | | B1 | Y1 | B2 | Y2 | B3 | Y3 | | Y4 |
| 4 | R1 | Y1 | R2 | | R3 | | | | B1 | Y1 | | Y2 | | | | |
| 5 | R1 | Y1 | | | | | | | B1 | Y1 | B2 | Y2 | | Y3 | | |
| 6 | R1 | Y1 | R2 | | | | | | B1 | Y1 | | Y2 | | | | |
| 7 | R1 | Y1 | | | | | | | B1 | Y1 | B2 | Y2 | B3 | Y3 | B4 | Y4 |

| | 0 | 1 | 2 | 3 | 4 | 5 | 6 | 7 | 8 | 9 | a | b | c | d | e | f |
|---|---|---|---|---|---|---|---|---|---|---|---|---|---|---|---|---|
| 0 | B1 | | R1 | Y2 | | Y1 | | | | | B2 | | | Y3 | Y1 | |
| 1 | B1 | | R2 | Y2 | R1 | Y1 | | | | | | | B3 | | Y1 | Y4 |
| 2 | B1 | | R1 | Y2 | R3 | Y1 | | | | | B2 | | | Y3 | Y1 | |
| 3 | B1 | | R2 | Y2 | R1 | Y1 | | | | | | | | Y1 | B4 | |
| 4 | B1 | | R1 | Y2 | | Y1 | R4 | | | | B2 | | | Y3 | Y1 | |
| 5 | B1 | | R2 | Y2 | R1 | Y1 | | | | | | | B3 | | Y1 | Y4 |
| 6 | B1 | | R1 | Y2 | R3 | Y1 | | | | | B2 | | | Y3 | Y1 | |
| 7 | B1 | | R2 | Y2 | R1 | Y1 | | | | | | | | | Y1 | |

## Figure 11

**Figure 12**

**Figure 13**

**EP 1 585 060 A1**

**European Patent Office**

**EUROPEAN SEARCH REPORT**

Application Number

EP 04 00 8308

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | YA-QIN ZHANG ET AL INTERNATIONAL SOCIETY FOR OPTICAL ENGINEERING: "MOTION-COMPENSATED WAVELET TRANSFORM CODING FOR COLOR VIDEO COMPRESSION" VISUAL COMMUNICATION AND IMAGE PROCESSING '91: VISUAL COMMUNICATION. BOSTON, NOV. 11 - 13, 1991, PROCEEDINGS OF SPIE, BELLINGHAM, SPIE, US, vol. PART 1 VOL. 1605, 11 November 1991 (1991-11-11), pages 301-316, XP000479241 | 1-3,5,7, 8,13,15, 17,18 | G06T9/00 |
| Y | * abstract * <br> * Sections 2, 3, 6 "* <br> ----- | 4,14 | |
| X | EP 0 576 763 A (IBM) <br> 5 January 1994 (1994-01-05) <br> * page 3, line 17 - page 4, line 27 * <br> ----- | 1,2,5,15 | |
| X | MANDAL M K ET AL: "Adaptive multiresolution motion estimation techniques for wavelet-based video coding" PROCEEDINGS OF THE SPIE - THE INTERNATIONAL SOCIETY FOR OPTICAL ENGINEERING SPIE-INT. SOC. OPT. ENG USA, vol. 3309, 1997, pages 965-974, XP001183609 ISSN: 0277-786X *Sections 3.1, 3.2 ** figure 4 * <br> ----- | 1,2 | **TECHNICAL FIELDS SEARCHED (Int.Cl.7)** <br><br> G06T |
| Y | US 5 984 514 A (HALLMARK PHIL ET AL) <br> 16 November 1999 (1999-11-16) <br> * column 4, line 42 - column 5, line 43 * <br> * column 13, line 20 - column 14, line 9 * <br> ----- <br><br> -/-- | 4,14 | |

The present search report has been drawn up for all claims

| Place of search | Date of completion of the search | Examiner |
|---|---|---|
| Munich | 27 September 2004 | Zamuner, U |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................
& : member of the same patent family, corresponding
    document

EPO FORM 1503 03.82 (P04C01)

European Patent
Office

**EUROPEAN SEARCH REPORT**

Application Number

EP 04 00 8308

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | TAN W ET AL: "Real time software implementation of scalable video codec" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 September 1996 (1996-09-16), pages 17-20, XP010202068 ISBN: 0-7803-3259-8 * the whole document * ----- | | |

TECHNICAL FIELDS
SEARCHED     (Int.Cl.7)

The present search report has been drawn up for all claims

| Place of search | Date of completion of the search | Examiner |
|---|---|---|
| Munich | 27 September 2004 | Zamuner, U |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 04 00 8308

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2004

| Patent document cited in search report | | Publication date | Patent family member(s) | | Publication date |
|---|---|---|---|---|---|
| EP 0576763 | A | 05-01-1994 | EP | 0576763 A1 | 05-01-1994 |
| | | | JP | 2620489 B2 | 11-06-1997 |
| | | | JP | 6133285 A | 13-05-1994 |
| | | | US | 5629737 A | 13-05-1997 |
| US 5984514 | A | 16-11-1999 | NONE | | |

EPO FORM P0459

For more details about this annex : see Official Journal of the European Patent Office, No. 12/82